# EUROPÄISCHE PATENTSCHRIFT

(11) **EP 3 974 793 B1**
(45) Veröffentlichungstag und Bekanntmachung des Hinweises auf die Patenterteilung: **26.06.2024**
(21) Anmeldenummer: 20020431.1
(22) Anmeldetag: 25.09.2020
(51) Int. Cl.: G01K 13/02

(54) **MESSVORRICHTUNG ZUM MESSEN AXIALER TEMPERATURPROFILE IN EINEM REAKTORROHR**
MEASURING DEVICE FOR MEASURING AXIAL TEMPERATURE PROFILES IN A REACTOR TUBE
DISPOSITIF DE MESURE PERMETTANT DE MESURER DES PROFILS DE TEMPÉRATURE AXIAUX DANS UN TUBE DE RÉACTEUR

(43) Veröffentlichungstag der Anmeldung: 30.03.2022
(73) Patentinhaber: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Erfinder: BRUDER, Frank, 60439 Frankfurt am Main (DE); ULBER, Dieter, 60439 Frankfurt am Main (DE); DAVID, Marion, 78350 Jouy-En-Josas (FR); GARY, Daniel, 78350 Jouy-En-Josas (FR)
(74) Vertreter: Air Liquide

(56) Entgegenhaltungen:
- EP-A2- 2 679 968
- US-A- 2 981 106
- US-A1- 2016 263 542

## Beschreibung

### Gebiet der Erfindung

Die Erfindung betrifft
- eine Messvorrichtung zum Messen axialer Temperaturprofile in einem Reaktorrohr,
- ein Verbindungsstück zum Verbinden des Reaktorrohrs mit einem als Thermospannungskompensator ausgestalteten Zuleitungsrohr für einen Reaktoreinsatzstrom und zum seitlichen Einführen eines Mehrpunkt-Thermoelements in das Reaktorrohr,
- die Verwendung des Verbindungsstücks bzw. Messvorrichtung zur Messung axialer Temperaturprofile in einem Reformerrohr für die Dampfreformierung von Kohlenwasserstoffen und
- ein Verfahren zum Montieren der Messvorrichtung.

Insbesondere betrifft die Erfindung eine Messvorrichtung zum Messen axialer Temperaturprofile des Synthesegases in einem oder mehreren Reformerrohren in einer Reformierungsanlage für die Dampfreformierung von Kohlenwasserstoffen zu einem Wasserstoff und Kohlenoxide enthaltenden Synthesegasprodukt.

### Stand der Technik

Messvorrichtungen zum Messen axialer Temperaturprofile in Reaktorrohren, insbesondere in Reaktorrohren, die einen festen, partikulären Katalysator als Schüttung enthalten, sind an sich bekannt und im Schrifttum beschrieben. Solche Messvorrichtungen sind zur Beurteilung und Kontrolle des Reaktorverhaltens und Reaktorsteuerung von großer Bedeutung, insbesondere wenn mit dem Reaktor heterogen katalysierte Reaktionen mit starker endothermer oder exothermer Wärmetönung bei hohen Reaktionstemperaturem durchgeführt werden sollen.

Die Kenntnis des genauen axialer Temperaturprofiles in einem Reaktorrohr, beispielsweise in einem Reformerrohr einer Anlage zur Dampfreformieurng von Kohlenwasserstoffen zu Synthesegas, führt zu einem besseren Verständnis der dort ablaufenden Vorgänge und zu einer optimierten und sichereren Steuerung der Reformeranlage. Der Zugang zu diesen Informationen ist von hohem Wert, um zu verhindern, dass übermäßig hohe Temperaturen insbesondere unter instationären Bedingungen zur thermischen Zerstörung des Reformerrohres führen und um das Risiko der unerwünschten Kohlenstoffbildung im Reformerrohr zu begrenzen. Gemessene axiale Temperaturprofile in Reformerrohren ermöglichen es, den tatsächlichen Grad der Erreichung des Reaktionsgleichgewichtes mit großer Genauigkeit zu bestimmen. Ferner bieten die gemessenen Temperaturen unter Realbedingungen eine gute Grundlage für zukünftige Reaktorauslegungen.

Die Einführung von Thermoelementen in das Innere von Reformerrohren ist jedoch aufgrund der hohen Druck- und Temperaturbedingungen eine Herausforderung. Die Thermoelement-Sonde muss außerdem dünn genug sein, um Störungen in der Porosität des katalytischen Bettes zu vermeiden und die Druckabdichtung muss gewährleistet sein.

In letzter Zeit werden Mehrpunkt-Thermoelementsysteme kommerziell angenoten, die die Messung interner Temperaturprofile innerhalb von Reaktorrohren ermöglichen sollen, wobei sie so ausgestaltet sind, dass sie unterschiedlichen, teilweise drastischen Temperatur- und Druckbetriebsbedingungen standhalten können. Ein solches Mehrpunkt-Thermoelement wird üblicherweise so installiert, dass die Klemmverschraubung der Sonde am oberen Ende des Rohrs erfolgt, beispielsweise im oberen Flansch, der normalerweise nur für die Katalysatorfüllung verwendet wird. In einer solchen Anordnung wird die Einspeisung des Einsatzgasgemischs über ein seitliches Ansatzrohr in den Reaktor Reaktorrohr eingeleitet. Entsprechend würde im Falle eines Reformerrohres über ein seitliches Ansatzrohr das überhitzte Kohlenwasserstoff-Dampf-Gemisch in das Reformerrohr eingeleitet, während das Mehrpunkt-Thermoelement axial und fluchtend zur Längsachse des Reformerrohrs durch den eintrittsseitig vorgesehenen Abschlussflansch eingeführt wird.

Eine entsprechende Anordnung der Messvorrichtung und des Reaktorrohrs wird beispielhaft in Fig. 1 dargestellt und auch in der US-Patentanmeldung US 2016/0263542 A1 offenbart. Das dort beschriebene Mehrpunkt-Thermoelement ist als Monoblocksystem aufgebaut und besteht aus etwa zehn einzelnen Thermoelementen bzw. Thermoelementsensoren, die in einer Inconel-Hülle angeordnet und in einen elektrischen Isolator eingebettet sind. Die Thermoelementsensoren sind in verschiedenen Höhen angeordnet. Das Monoblocksystem wird entlang der Achse des Reaktorrohrs zusammen mit der Beladung des Katalysators installiert, wobei ein System von Dämpfern verwendet wird, um den Fall der Katalysatorpartikel beim Beladen über den oberen Flansch des Reaktorrohres abzuschwächen und somit zu verhindern, dass sie brechen. Die Zentrierung der Mehrpunkt-Thermoelement-Baugruppe im Reaktorrohr wird über Abstandshalter bzw. Zentrierkörper bewirkt, die beim Befüllen des Reaktorrohrs mit dem Katalysator sukzessive nach oben hin entfernt werden. Das Mehrpunkt-Thermoelement wird axial und fluchtend zur Längsachse des Reaktorrohrs durch den eintrittsseitig vorgesehenen Abschlussflansch geführt und elektrisch mittels eines Transmitters mit der zugehörigen Signalerfassungsvorrichtung verbunden. Sodann können die gemessenen Temperaturen angezeigt und/oder zu nachgelagerten Datenverarbeitungsvorrichtungen, beispielsweise einem Prozessleitsystem, zugeführt werden.

Im Falle des Betriebs von Reformerrohren zur Dampfreformierung von Kohlenwasserstoffen weist die beschriebene Anordnung des Mehrpunkt-Thermoelements gewisse Nachteile auf. Aufgrund der bei der Dampfreformierung auftretenden hohen Reaktortemperaturen kommt es im Betrieb zu einer erheblichen Längenzunahme der Reformerrohre gegenüber Umgebungsbedingungen. Um die dabei auftretenden thermischen Spannungen zu reduzieren, werden die Einlass- und häufig auch die Auslassseite der Reformerrohre über Thermospannungskompensatoren mit dem Einlass- bzw. Auslassgasverteilersystem verbunden, die als Rohrbögen oder Rohrwendel ausgestaltet sind und in der Fachsprache als Pigtail bezeichnet werden. Sie werden zwischen Reformerrohr und Zuleitungsrohr für das überhitzte Kohlenwasserstoff-Dampf-Gemisch geschaltet und mit diesen mittels Schweiss- oder Flanschverbindungen verbunden. Trotzdem kommt es infolge der seitlichen Anordnung des Zuleitungsrohrs zu thermischen Spannungen auf das ohnehin thermisch stark beanspruchte Reformerrohr, die senkrecht zur Längsachse des Reformerrohrs wirken und somit zu dessen Deformation führen können. Ferner ist die Umlenkung der Gasströmungsrichtung des Einsatzgases um einen Winkel von bis zu 90° vom Einlassrohr in das Reformerrohr strömungstechnisch ungünstig, da sich auf diese Weise Zonen mit höherer Temperatur ausbilden können, in denen es verstärkt zum Cracken der eingeleiteten Kohlenwasserstoffe und damit zu lokaler Koksablagerung kommt. Beispielsweise bildet der Bereich des Reformerrohrs oberhalb der Ansatzstelle des Zuleitungsrohrs eine wenig durchströmte Zone (Totzone), in der in besonderem Maße die Gefahr lokaler Überhitzung und somit unerwünschter lokaler Koksbildung und Koksablagerung besteht. Eine Zuführung des Kohlenwasserstoff-Dampf-Gemisch bei der Dampfreformierung von Kohlenwasserstoffen durch ein fluchtend zur Reformerrohr-Längsachse angeordnetes Zuleitungsrohr wäre daher vorteilhaft und würde die genannten Nachteile zumindest reduzieren, allerdings kann das in Fig. 1 gezeigte bzw. das in US 2016/0263542 A1 beschriebene Mehrpunkt-Thermoelement dann nicht mehr in der beschreibenen Weise verwendet werden.

Das Patentdokument EP 2679968 A2 offenbart eine eine Temperaturmesseinrichtung zur Messung der Temperatur eines durch ein Rohrleitungsstück fließenden Mediums, wobei die Temperaturmesseinrichtung eine in das Rohrleitungsstück eingebrachte Temperaturmesshülse umfasst, in der ein Temperatursensor angebracht ist. Dabei ragt die Temperaturmesshülse zum Teil in das Rohrleitungsstück hinein, wobei die Wandstärke zumindest des in das Rohrleitungsstück hineinragenden Teils der Temperaturmesshülse geringer ist als die des Rohrleitungsstücks, wobei die Wandstärke und/oder der Außendurchmesser der Temperaturmesshülse in einem vorgegebenen Bereich um den Temperatursensor herum nochmals verringert ist. Es ist allerdings nicht ersichtlich, dass sich eine solche Konstruktion zum Einführen eines Mehrpunkt-Thermoelements in ein Katalysatorbett in einem Reformerrohr auch bei axial fluchtender Anordnung von Reformerrohr und Zuleitungsrohr eignet.

Das Patentdokument US 2981106 A beschreibt eine Pyrometerkolbenkonstruktion für den Einsatz in radioaktiv kontaminierten Flüssigkeiten, bestehend aus einem länglichen, rohrförmigen Körper, der an einem Ende geschlossen und am anderen Ende offen ist und an diesem anderen Ende einen nach außen gerichteten Flansch aufweist. Auch hier ist nicht ersichtlich, dass sich eine solche Konstruktion zum Einführen eines Mehrpunkt-Thermoelements in ein Katalysatorbett in einem Reformerrohr auch bei axial fluchtender Anordnung von Reformerrohr und Zuleitungsrohr eignet.

Insgesamt ist daher festzustellen, dass daher Bedarf an einer Vorrichtung besteht, die es gestattet, ein Mehrpunkt-Thermoelement auch bei axial fluchtender Anordnung von Reformerrohr und Zuleitungsrohr in einfacher Weise in das Reformerrohr einzuführen.

### Beschreibung der Erfindung

Die Aufgabe der vorliegenden Erfindung besteht daher darin, die Verwendung eines Mehrpunkt-Thermoelements im Inneren eines Reformerrohrs für die katalytische Dampfreformierung von Kohlenwasserstoffen in einer Konfiguration zu ermöglichen, bei der die Einleitung des Einsatzgases in das Reformerrohr senkrecht durch das obere oder untere Ende des Reformerrohrs mittels eines Zuleitungsrohrs erfolgt, wobei das als Thermospannungskompensator ausgestaltete oder das mit einem Thermospannungskompensator versehende Zuleitungsrohr einerseits und das Reformerrohr andererseits hinsichtlich ihrer Längsachse axial fluchtend angeordnet sind und gasdicht verbindbar sind, beispielsweise durch einen Flansch verbunden werden, der sich am eintrittsseitigen Ende des Reformerrohrs befindet.

Diese Aufgabe wird in einem ersten Aspekt durch ein Verbindungsstück mit den Merkmalen des Anspruchs 1, in einem weiteren Aspekt durch eine Messvorrichtung mit den Merkmalen des Anspruchs 6 und in einem weiteren Aspekt durch ein Verfahren zum Montieren der Messvorrichtung mit den Merkmalen des Anspruchs 8 gelöst. Weitere Ausgestaltungen der Erfindung ergeben sich aus den abhängigen Ansprüchen der jeweiligen Kategorie. Die Erfindung betrifft ferner die Verwendung des Verbindungsstücks und/oder der Messvorrichtung zur Messung axialer Temperaturprofile in einem Reformerrohr für die Dampfreformierung von Kohlenwasserstoffen gemäß Anspruch 11.

Unter einem Thermospannungskompensator wird ein flexibles Element zum Ausgleich von Bewegungen in Rohrleitungen verstanden, insbesondere infolge thermischer Längenänderungen, beispielsweise von Reaktorrohren. Die Kompensation erfolgt dabei mechanisch, beispielsweise über einen elastischen Balg oder über Rohrbögen, Rohrwicklungen oder Rohrwendel, die entlang der Kompensationsrichtung elastisch verformbar sind, aber gleichzeitig ihre Hauptaufgabe als gegenüber der Umgebung dichtes Leitungsmittel für Fluidströmungen weiter versehen können. Beispielsweise kommt es aufgrund der bei der Dampfreformierung auftretenden hohen Reaktortemperaturen im Betrieb zu einer erheblichen Längenzunahme der Reformerrohre gegenüber Umgebungsbedingungen. Um die dabei auftretenden thermischen Spannungen zu reduzieren, werden die Einlassseite (Zuleitungsrohr) und häufig auch die Auslassseite der Reformerrohre über Thermospannungskompensatoren mit dem Einlass- bzw. Auslassgasverteilersystem verbunden, die als Rohrbögen oder Rohrwendel ausgestaltet sind und in der Fachsprache als Pigtail bezeichnet werden. Sie werden zwischen Reformerrohr und Einlassrohr für das überhitzte Kohlenwasserstoff-Dampf-Gemisch bzw. bzw. zwischen Reformerrohr und Auslassrohr für das erzeugte Rohsynthesegas geschaltet und mit diesen mittels Schweiss- oder Flanschverbindungen verbunden.

Als Übergangsstück oder Reduzierstück wird ein Formstück oder ein konisches Rohrstück verstanden, das innerhalb einer Rohrleitung angeordnet werden kann und einen Übergang zwischen zwei unterschiedlichen Rohr-Nennweiten bildet.

Angaben zu Eintrittsenden und Austrittsenden von Rohren oder Reaktoren beziehen sich auf die Strömungsrichtung von Fluiden, beispielsweise Gasen, durch die Rohre oder Reaktoren bei deren bestimmungsgemäßem Gebrauch.

Mehrpunkt-Thermoelemente messen die Temperatur an verschiedenen Punkten entlang ihrer Länge als Mehrpunkt-Temperaturprofilsensoren. Ihre Ausgestaltung umfasst eine ungeerdete (isolierte) Verbindung mit mehreren Messpunkten, die entlang der Länge der Sonde angeordnet sind. Kommerziell erhältliche Mehrpunkt-Thermoelemente gestatten die Messung von Temperaturen bis zu 1000 °C auf Längen bis zu mehreren zehn Metern. Diese Temperatursensoren werden häufig in der chemischen und petrochemischen Industrie eingesetzt, da ihre Verwendung Temperaturprofile für chemische Reaktoren auf einfache Weise zugänglich macht.

Unter Fluidverbindung zwischen zwei Bereichen der erfindungsgemäßen Vorrichtung wird dabei jegliche Art von Verbindung verstanden, die es ermöglicht, dass ein Fluid, beispielsweise ein Gasstrom, von dem einen zu dem anderen der beiden Bereiche strömen kann, unbeachtlich etwaiger zwischengeschalteter Bereiche oder Bauteile. Insbesondere wird unter einer direkten Fluidverbindung jegliche Art von Verbindung verstanden, die es ermöglicht, dass ein Fluid, beispielsweise ein Gasstrom, direkt von dem einen zu dem anderen der beiden Bereiche strömen kann, wobei keine weiteren Bereiche oder Bauteile zwischengeschaltet sind, mit Ausnahme reiner Transportvorgänge und der dazu benötigten Mittel, beispielsweise Rohrleitungen, Ventile, Pumpen, Verdichter, Vorratsbehälter. Ein Beispiel wäre eine Rohrleitung, die direkt dem einen zu dem anderen der beiden Bereiche führt.

Unter einem Mittel wird eine Sache verstanden, die die Erreichung eines Zieles ermöglicht oder dabei behilflich ist. Insbesondere wird unter einem Befestigungsmittel ein physischer Gegenstände verstanden, den der Fachmann in Betracht ziehen würde, um eine bevorzugt gasdichte Verbindung zwischen zwei Vorrichtungsteilen zu bewirken. Insbesondere werden Befestigungsmittel, die das Hindurchführen und gasdichte Befestigen eines Mehrpunkt-Thermoelements in einem Zuleitungsrohr gestatten, beispielsweise als Klemmverschraubung, Quetschverschraubung oder Schneidringverschraubung ausgeführt und vom Handel bereitgehalten. Einige der genannten Befestigungsmittel stellen lösbare und wiederverbindbare Verbindungen her und eignen sich für somit den wiederholten Einsatz.

Unter einer Datenverarbeitungsvorrichtung wird ein Computer oder eine sonstige Mess-, Steuerungs- und Regelungsvorrichtung verstanden, die dazu geeignet ist, aus der gemessenen Einzeltemperatur bzw. dem gemessenen Temperaturprofil nach einem festgelegten Algorithmus einen Stellwert für bestimmte Verfahrensparameter der Reaktoranlage zu erzeugen. Dies kann beispielsweise der Mengenstrom des Reaktorfeeds oder die Brennerleistung in einem Reformerofen sein.

Der Erfindung liegt die Erkenntnis zugrunde, dass es zur Reduzierung mechanischer Spannungen, die infolge von Längenzunahme von Reaktorrohren durch thermische Ausdehnung auftreten, günstig ist, wenn das Rohrelement, das mit einem Thermospannungskompensator ausgerüstet ist, in derselben Flucht angeordnet ist wie das Reaktorrohr selbst. Diese Längenzunahme ist insbesondere bei Reformerrohren für die Dampfreformierung von Kohlenwasserstoffen stark ausgeprägt, wenn die bei der Inbetriebnahme von Umgebungstemperatur auf die Reaktionstemperatur von nahe 1000 °C aufgeheizt werden. Bei der aus dem Stand der Technik bekannten, seitlichen Anordnung des Zuleitungsrohrs kommt es zu thermischen Spannungen auf das ohnehin thermisch stark beanspruchte Reformerrohr, die senkrecht zur Längsachse des Reformerrohrs wirken und somit zu dessen Deformation führen können. Ferner ist die Umlenkung der Gasströmungsrichtung des Einsatzgases um 90° vom Zuleitungsrohr in das Reformerrohr ungünstig, da sich auf diese Weise Zonen mit höherer Temperatur ausbilden können, in denen es verstärkt zum Cracken der eingeleiteten Kohlenwasserstoff und damit zu lokaler Koksablagerung kommt.

Eine Zuführung des Kohlenwasserstoff-Dampf-Gemisch bei der Dampfreformierung von Kohlenwasserstoffen durch ein fluchtend zur Reformerrohr-Längsachse angeordnetes Zuleitungsrohr wäre daher vorteilhaft und würde die genannten Nachteile zumindest reduzieren, allerdings kann das in Fig. 1 gezeigte bzw. das in US 2016/0263542 A1 beschriebene Mehrpunkt-Thermoelement dann nicht mehr in der beschreibenen Weise verwendet werden.

Diese Problematik wird mit der Erfindung dadurch gelöst, dass ein Verbindungsstück zwischen dem einlassseitigen Rohrende (Eintrittsende) des Reaktorrohrs und einem als Thermospannungskompensator ausgestalteten Zuleitungsrohr für das Einleiten eines Reaktoreinsatzstroms in das Reaktorrohr vorgesehen wird, das gleichzeitig als Reduzierstück oder Übergangsstück dient, falls das Eintrittsende des Reaktorrohrs und das Zuleitungsrohr verschiedene Nennweiten bzw. Innendurchmesser oder verschiedene Flanschgrößen aufweisen oder falls in das Eintrittsende des Reaktorrohrs ein rohrstückförmiger Isolierkörper eingebracht wurde.

Erfindungsgemäß weist das das erste Ende des Verbindungsstücks denselben Innendurchmesser auf wie das Eintrittsende des Reaktorrohrs oder wie ein in das Eintrittsende des Reaktorrohrs eingebrachtes, rohrförmiges Isolierstück. Dies bewirkt eine geringere lokale Verkokung durch Vermeidung von Totzonen oder Strömungsabrisskanten am Eintrittsende des Reaktorrohrs, insbesondere im Fall von Reformerrohren.

Isolierstücke der beschriebenen Art können in das Eintrittsende des Reaktorrohrs, insbesondere eines Reformerrohrs eingebracht werden, um eine stärkere thermische Isolierung dieses Rohrteils zu bewirken. Da das in das Reaktorrohr über das Zuleitungsrohr eintretende Gasgemisch im Fall der Dampfreformierung hier seine Maximaltemperatur aufweist, ist eine thermische Isolierung dieses Bereichs vorteilhaft, um die Wärmeübertragung auf das Rohr und den tragenden Stahlbau zu minimieren. Das hierzu verwendete Isolierstück besitzt die Form eines Rohrstücks oder Hohlzylinders und ist beispielsweise aus einem Werkstoff gefertigt, der eine geringere Wärmeleitfähigkeit aufweist wie das Reaktorrohr. Es wird vor der Montage des Verbindungsstücks in das Eintrittsende des Reaktorrohrs eingeführt mittels einer dem Fachmann bekannten Methode dort befestigt. Zusätzlich erleichtert das erfindungsgemäße Verbindungsstück auch die Montage und Demontage des als Thermospannungskompensator ausgestalteten Zuleitungsrohrs (Pigtail), wenn ein solches Isolierstück verwendet wird, da die Montage bzw. Demontage des Zuleitungsrohrs nunmehr in Richtung der Längsachse des Reaktorrohrs erfolgt und nicht mehr senkrecht dazu wie bei einem Zuleitungsrohr mit Thermospannungskompensator gemäß Stand der Technik.

Das Eintrittsende des Reaktorrohrs, das Verbindungsstück und das Austrittsende des Zuleitungsrohrs, beispielsweise das zylinderförmige, einen kreisrunden Querschnitt aufweisende Austrittsende des Zuleitungsrohrs werden bei der Montage bezüglich ihrer Längsachsen fluchtend hintereinander angeordnet und gasdicht verbunden, beispielsweise durch Schweissverbindungen oder bevorzugt Flanschverbindungen, da letztere zerstörungsfrei lösbar und somit wiederverwendbar sind. Erfindungsgemäß ist an dem Verbindungsstück ein mit diesem gasdicht verbundenes und sich in das Verbindungsstück hinein öffnendes Führungsrohr angebracht, das an seinem von dem Verbindungsstück fortweisenden Ende mit einem Befestigungsmittel ausgestattet ist. Das Befestigungsmittel kann beispielsweise aus einem an dem Rohrende des Führungsrohrs angebrachten Außengewinde und einer dazu passenden Klemmverschraubung, Quetschverschraubung oder Schneidringverschraubung bestehen, die das Hindurchführen und gasdichte Befestigen eines Mehrpunkt-Thermoelements gestatten. Von Bedeutung ist es dabei, dass der Winkel zwischen der gemeinsamen Längsachse von Reaktorrohr, Verbindungsstück und dem Austrittsende des Zuleitungsrohrs einerseits und dem Führungsrohr andererseits zwischen 15 und 60°, bevorzugt zwischen 20 und 45° beträgt und der Winkel in Richtung auf das Zuleitungsrohr weist, also von dem Reaktorrohr fortweist. Auf diese Weise wird es ermöglicht, ein Mehrpunkt-Thermoelement mittels des Führungsrohrs über das Eintrittsende des Reaktorrohrs in dessen Inneres einzuführen, ohne dass der hierfür erforderliche Kraftaufwand zu groß wird und zu starke Deformationen des Mehrpunkt-Thermoelements vermieden werden. Der Biegeradius von Mehrpunkt-Thermoelementen ist im Vergleich zu Einzelthermoelementen stärker begrenzt, da für jeden Temperaturmesspunkt ein entsprechendes Thermopaar vorzusehen ist und oft alle Thermopaare mit ihren Zuleitungen in ein gemeinsames Hüllrohr eingebettet werden, das zwar flexibel ist, dessen Flexibilität aber aufgrund der im Vergleich zu Einzelthermoelementen größeren Dicke der Anordnung begrenzt ist.

### Bevorzugte Ausgestaltungen der Erfindung

Ein zweiter Aspekt des erfindungsgemäßen Verbindungsstücks ist dadurch gekennzeichnet, dass der erste Abschnitt, der zweite Abschnitt, das mindestens eine Übergangsstück und das Führungsrohr oder Kombinationen dieser Elemente einstückig oder mehrstückig, aber gasdicht verbindbar ausgeführt sind, so dass alle Elemente im verbundenen Zustand miteinander in Fluidverbindung stehen. So könnten beispielsweise der erste Abschnitt, der zweite Abschnitt und das eine oder die Kombination mehrere Übergangsstücke, beispielsweise mit zwischen den Übergangsstücken angeordneten, zylinderförmigen, geraden Rohrabschnitten, als gemeinsames Formstück ausgestaltet werden und durch Metallguss, durch 3D-Druckverfahren, durch Verschweißen mehrerer Drehteile miteinander oder alternativ durch Fräsen aus Vollmaterial hergestellt werden. Günstigerweise wird sodann das Führungsrohr mit dem gemeinsamen Formstück durch Schweissen gasdicht verbunden.

Ein dritter Aspekt des erfindungsgemäßen Verbindungsstücks ist dadurch gekennzeichnet, dass im verbundenen Zustand die gemeinsame Längsachse des Verbindungsstücks mit dem Mittelpunkt des Eintrittsendes des Reaktorrohrs und mit dem Mittelpunkt des Austrittsendes des Zuleitungsrohrs zusammenfällt. Auf diese Weise wird das Auftreten von Thermospannungen, insbesondere von senkrecht zur Längsachse des Reaktorrohrs auftretenden Thermospannungen wirkungsvoll reduziert. Ferner werden lokale Koksablagerungen durch unerwünschtes thermisches Cracken der eingeleiteten Kohlenwasserstoffe vermindert, da Totzonen vermieden werden.

Ein vierter Aspekt des erfindungsgemäßen Verbindungsstücks ist dadurch gekennzeichnet, dass der erste und/oder der zweite Abschnitt einen Flansch aufweisen, der mit Flansch-Gegenstücken an dem Eintrittsende des Reaktorrohrs und/oder an dem Austrittsende des Zuleitungsrohrs gasdicht verbindbar ist. Flanschverbindungen bieten eine gasdichte Verbindungsmöglichkeit und sind zerstörungsfrei lösbar und somit wiederverwendbar.

Ein fünfter Aspekt des erfindungsgemäßen Verbindungsstücks ist dadurch gekennzeichnet, dass das von dem Verbindungsstück fortweisende Ende des Führungsrohrs ein Außengewinde aufweist und eine Rohrverschraubung, Quetschverschraubung, Klemmverschraubung oder Schneidringverschraubung als Befestigungsmittel dient. Solche Befestigungsmittel, die das Hindurchführen und gasdichte Befestigen eines Mehrpunkt-Thermoelements in einem Zuleitungsrohr gestatten, werden vom Handel bereitgehalten. Einige der genannten Befestigungsmittel stellen lösbare und wiederverbindbare Verbindungen her und eignen sich für somit den wiederholten Einsatz. Dies ist von Bedeutung, da beim Entleeren des Reaktorrohrs in der Regel das Mehrpunkt-Thermoelement entfernt und beim anschließenden Befüllen des Reaktorrohrs mit frischem Katalysator eine erneute Montage des Mehrpunkt-Thermoelements vorgenommen werden muss.

Ein sechster Aspekt der Erfindung betrifft eine Messvorrichtung zum Messen axialer Temperaturprofile in einem Reaktorrohr, umfassend:
(a) ein Verbindungsstück nach Anspruch 1 bis 5,
(b) ein Mehrpunkt-Thermoelement,
(c) mindestens einen Zentrierkörper zum Zentrieren des Mehrpunkt-Thermoelements im Reaktorrohr, wobei der Zentrierkörper umfasst:
   (c1) einen Innenring, der das Durchführen des Mehrpunkt-Thermoelements gestattet,
   (c2) eine Vielzahl von Distanzstücken, die in Bezug auf den Innenring radial und in gleichen Abständen an der Außenseite des Innenrings angeordnet sind, wobei die Distanzstücke gleiche Länge aufweisen und die Länge so gewählt wird, dass der Kreismittelpunkt des Innenrings mit der Längsachse des Reaktorrohrs zusammenfällt, wenn der Zentrierkörper in den Reaktorrohr eingebracht wird und die durch die Distanzstücke aufgespannte Ebene senkrecht zu der Längsachse des Reaktorrohrs angeordnet ist. Zentrierkörper der genannten Art sind an sich bekannt und werden beispielsweise in der US-Patentanmeldung US 2016/0263542 A1 beschrieben. Ihre Verwendung ist im Zusammenhang mit der vorliegenden Erfindung aber von besonderer Bedeutung, da aufgrund des geringeren maximalen Biegeradius von Mehrpunkt-Thermoelementen deren sichere Führung und Zentrierung von besonderer Bedeutung ist.

In einem siebten Aspekt der Erfindung ist die Messvorrichtung zum Messen axialer Temperaturprofile in einem mit einer Schüttung eines festen, partikelförmigen Katalysators gefüllten Reaktorrohr ausgestaltet und dadurch gekennzeichnet, dass der mittlere Abstand zweier benachbarter Distanzstücke größer ist als die mittlere Länge der Katalysatorpartikel. auf diese Weise wird sichergestellt, dass die Katalysatorpartikel beim Befüllen des Reaktorrohrs an den Zentrierkörpern vorbeifallen und nicht durch diese zurückgehalten werden, wodurch die Ausbildung einer kompakten Katalysatorschüttung behindert würde.

Ein achter Aspekt der Erfindung betrifft ein Verfahren zum Montieren der erfindungsgemäßen Messvorrichtung in einem Reaktorrohr zur Durchführung endothermer oder exothermer, heterogen katalysierter chemischer Reaktionen, umfassend folgende Schritte:
(a) Bereitstellen des Reaktorrohrs, der Messvorrichtung, des Zuleitungsrohrs für den Reaktoreinsatzstrom und eines festen, partikelförmigen Katalysators als Schüttgut,
(b) Durchführen des Mehrpunkt-Thermoelements durch das Zuleitungsrohr und durch die Innenringe von mindestens zwei, bevorzugt mindestens drei Zentrierkörpern,
(c) Einführen des Mehrpunkt-Thermoelements mit den Zentrierkörpern in das Innere des Reaktorrohrs durch dessen Eintrittsende,
(d) Einfüllen des festen, partikelförmigen Katalysators bis zu einer festgelegten Füllhöhe,
(e) gasdichtes Verbinden des Verbindungsstücks mit dem Eintrittsende des Reaktorrohrs,
(f) gasdichtes Verbinden des Verbindungsstücks mit dem Austrittsende des Zuleitungsrohrs,
(g) gasdichtes Befestigen des Mehrpunkt-Thermoelements im Führungsrohr mit dem Befestigungsmittel.

Ein solches Verfahren kann besonders dann vorteilhaft angewendet werden, wenn die Zentrierkörper den Reaktionsverlauf nicht stören und während des Reaktorbetriebs im Reaktorrohr verbleiben können.

Bei der Durchführung des Verfahrens zum Montieren der erfindungsgemäßen Messvorrichtung in einem Reaktorrohr ist darauf zu achten, dass das Mehrpunkt-Thermoelement Reformerrohr-Innenwand möglichst nicht berührt, da dies bei nachfolgenden Temperaturmessungen zu Messfehlern führen kann.

In einem neunten Aspekt der Erfindung ist das Verfahren zum Montieren der Messvorrichtung dadurch gekennzeichnet, dass
(a) das Einfüllen des festen, partikelförmigen Katalysators bis zur Unterkante des untersten Zentrierkörpers erfolgt,
(b) der unterste Zentrierkörper um eine festgelegte Länge entlang der Längsachse des Reaktorrohrs angehoben wird,
(c) die Schritte (a) und (b) wiederholt werden, bis die festgelegte Füllhöhe erreicht ist,
(d) der mindestens eine Zentrierkörper vor dem Verbinden des Verbindungsstücks mit dem Reaktorrohr entfernt wird.

Ein solches Verfahren stellt eine Alternative zu dem vorgenannten Aspekt der Erfindung dar, bei dem die Zentrierkörper den Reaktionsverlauf bzw. den Reaktorbetrieb stören könnten und daher vor der Inbetriebnahme des Reaktorrohrs entfernt werden müssen. Dazu ist es gemäß Schritt (d) erforderlich, den oder die Zentrierkörper vor dem Verbinden des Verbindungsstücks mit dem Reaktorrohr zu entfernen. Dies ist beispielsweise dadurch möglich, dass die Zentrierkörper seitlich aufgeschnitten und sodann seitlich von dem Mehrpunkt-Thermoelement abgenommen werden, was allerdings zur Zerstörung des Zentrierkörpers führt. Vorteilhaft ist es somit, wenn die Zentrierkörper mehrstückig ausgeführt werden und die mehreren Teilstücke beispielsweise über Schraubverbindungen verbunden werden, da die Zentrierkörper dann beim nächsten Befüllen nochmals verwendet werden können.

In einem zehnten Aspekt der Erfindung ist das Verfahren zum Montieren der Messvorrichtung dadurch gekennzeichnet, dass das gasdichte Verbinden des Verbindungsstücks mit dem Eintrittsende des Reaktorrohrs und/oder das gasdichte Verbinden des Verbindungsstücks mit dem Austrittsende des Zuleitungsrohrs mittels Flanschverbindungen und/oder Schweissverbindungen erfolgt. Beide Verbindungsarten liefern bei korrekter Ausführung gasdichte Verbindungen und sind bis zu hohen Drücken belastbar. Flanschverbindungen bieten zudem den Vorteil der reversiblen Lösbarkeit und Wiederverwendbarkeit.

Ein elfter Aspekt der Erfindung betrifft die Verwendung des Verbindungsstücks und/oder der Messvorrichtung zur Messung axialer Temperaturprofile in einem Reformerrohr für die Dampfreformierung von Kohlenwasserstoffen. Das vorgeschlagene, erfindungsgemäße Verbindungsstück bzw. die Messvorrichtung eignen sich für diese Verwendung besonders gut, da hierbei der Längenzuwachs der Reformerrohre beim Aufheizen der Reformeranlage von Umgebungstemperatur auf die Reaktionstemperatur besonders hoch ist. Die Länge von Reformerrohren beträgt üblicherweise 10 Meter oder mehr, der Längenzuwachs durch thermische Ausdehnung kann dabei mehrere Dezimeter betragen.

### Ausführungsbeispiel

Weiterbildungen, Vorteile und Anwendungsmöglichkeiten der Erfindung ergeben sich auch aus der nachfolgenden Beschreibung von Ausführungs- und Zahlenbeispielen und der Zeichnungen.

Es zeigen:
- Fig. 1: ein Beispiel eines Reaktorrohrs für die katalytische Dampfreformierung von Kohlenwasserstoffen mit einer Messvorrichtung zum Messen axialer Temperaturprofile gemäß des Stands der Technik (z. B. US 2016/0263542 A1),
- Fig. 2: ein Beispiel eines erfindungsgemäßen Verbindungsstücks zum Verbinden eines Reaktorrohrs für die katalytische Dampfreformierung von Kohlenwasserstoffen mit einem als Thermospannungskompensator ausgestalteten Zuleitungsrohr für einen Reaktoreinsatzstrom und zum seitlichen Einführen eines Mehrpunkt-Thermoelements in das Reaktorrohr,
- Fig. 3: ein Beispiel eines Reaktorrohrs für die katalytische Dampfreformierung von Kohlenwasserstoffen mit einer Messvorrichtung zum Messen axialer Temperaturprofile mit montiertem Verbindungsstück gemäß der Erfindung,
- Fig. 4: ein Beispiel eines Reaktorrohrs für die katalytische Dampfreformierung von Kohlenwasserstoffen mit einer Messvorrichtung zum Messen axialer Temperaturprofile mit montiertem Verbindungsstück gemäß der Erfindung in alternativer Ausgestaltung, wenn ein rohrförmiges Isolierstück in das Eintrittsende des Reaktorrohrs eingebracht wurde.

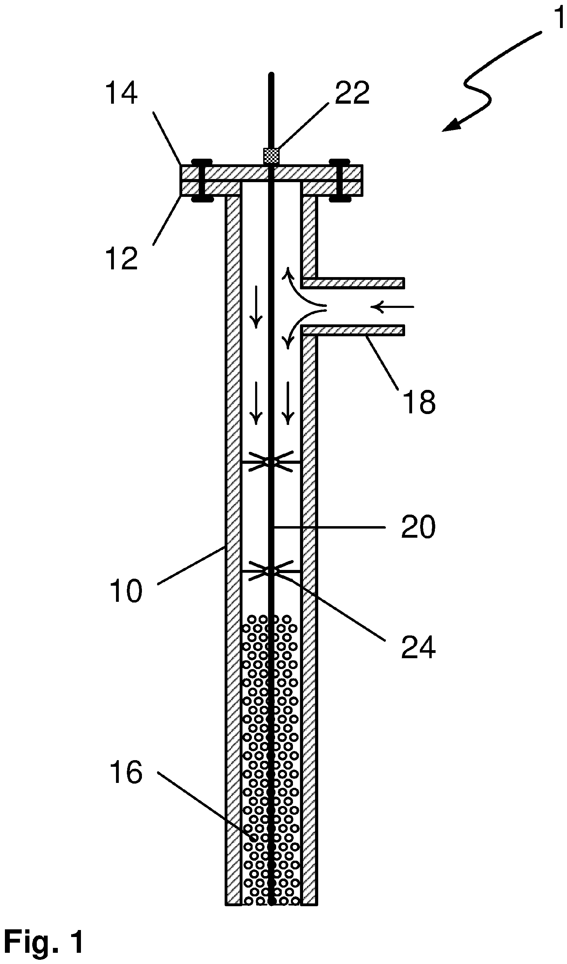

Fig. 1 zeigt beispielhaft und schematisch ein Reformerrohr 1 für die katalytische Dampfreformierung von Kohlenwasserstoffen mit einer Messvorrichtung zum Messen axialer Temperaturprofile in dem Reaktorrohr gemäß des Stands der Technik (z. B. gemäß US 2016/0263542 A1). Die gezeigte Anordnung umfasst ein Reaktorrohr 10 mit einem eintrittsseitigen Flansch 12, der mittels eines angeflanschten Deckels 14 verschlossen ist. Das Reaktorrohr ist mit einer Schüttung 16 eines partikelförmigen Katalysators für die Dampfreformierung von Kohlenwasserstoffen gefüllt. Die umzusetzenden Kohlenwasserstoffe, beispielsweise Methan, Butan oder Naphtha, werden mit Dampf zu einem gasförmigen Einsatzgemisch vermischt und nach Aufheizung in einer nicht gezeigten Heizvorrichtung mittels eines Zuleitungsrohrs 18 in das Reaktorrohr 10 eingeleitet. Die Strömungsverhältnisse in dem gasförmigen Einsatzgemisch sind mittels Strömungspfeilen angedeutet. Aus diesen ist ersichtlich, dass sich ein Anteil des gasförmigen Einsatzgemischs nach Eintreten in das Eintrittsende des Reaktorrohrs aufgrund von Wirbelbildung zunächst entgegen der Hauptströmungsrichtung bewegt, da sich in dem Bereich des Innenvolumens des Reaktorrohrs zwischen eintrittsseitigem Flansch und Zuleitungsrohr eine nur wenig durchströmte Totzone bildet, in der es wegen der vergleichsweise hohen Verweilzeit des erhitzten Kohlenwasserstoff-Dampf-Gemischs zu unerwünschter Koksbildung kommt.

Das axiale Temperaturprofil innerhalb der Katalysatorschüttung wird mittels eines Mehrpunkt-Thermoelements 20 gemessen, das über eine Bohrung im Deckel in das Innere des Reaktorrohrs eingeführt werden kann. Mittels einer Klemmverschraubung 22 kann das Mehrpunkt-Thermoelement an dem Deckel 14 gasdicht gegenüber der Umgebung befestigt werden, so dass ein unerwünschtes Austreten von Einsatzgas oder Produktgas aus dem unter erhöhtem Druck stehenden Reaktorrohr vermieden wird. Die Bohrung im Deckel 14 kann hierzu beispielsweise mit einem nicht bildlich gezeigten Innengewinde versehen werden, das mit einem passenden Außengewinde an der Klemmverschraubung verbunden werden kann.

Mittels mehrerer Zentrierkörper 24, die für das gasförmige Einsatzgemisch und - beim Befüllen des Reaktorrohrs mit Katalysator - für einzelne Katalysatorpartikel durchlässig sind, wird das Mehrpunkt-Thermoelement in der Rohrmitte des Reaktorrohrs fixiert.

Im Falle des Betriebs des Reaktorrohrs 10 für die Dampfreformierung von Kohlenwasserstoffen weist die beschriebene Anordnung des Mehrpunkt-Thermoelements Nachteile auf. Aufgrund der bei der Dampfreformierung auftretenden hohen Reaktortemperaturen kommt es im Betrieb zu einer erheblichen Längenzunahme des Reaktorrohrs gegenüber Umgebungsbedingungen. Um die dabei auftretenden thermischen Spannungen zu reduzieren, wird beispielsweise das Zuleitungsrohr mit bildlich nicht gezeigte Thermospannungskompensatoren verbunden; alternativ kann das Zuleitungsrohr auch als Thermospannungskompensator ausgestaltet sein. Trotzdem kommt es infolge der seitlichen Anordnung des Einlassrohres zu thermischen Spannungen auf das ohnehin thermisch stark beanspruchte Reaktorrohr, die senkrecht zu seiner Längsachse wirken und somit zu dessen Deformation führen können. Ferner ist die Umlenkung der Gasströmungsrichtung des Einsatzgases um Winkel bis zu 90° vom Einlassrohr in das Reaktorrohr ungünstig, da sich auf diese Weise Zonen mit höherer Temperatur ausbilden können, in denen es verstärkt zum Cracken der eingeleiteten Kohlenwasserstoffe und damit zu lokaler Koksablagerung kommt. Beispielsweise bildet der Bereich des Reaktorrohrs oberhalb der Ansatzstelle des Einlassrohres eine wenig durchströmte Zone (Totzone), in der in besonderem Maße die Gefahr lokaler Überhitzung und somit unerwünschter lokaler Koksbildung besteht.

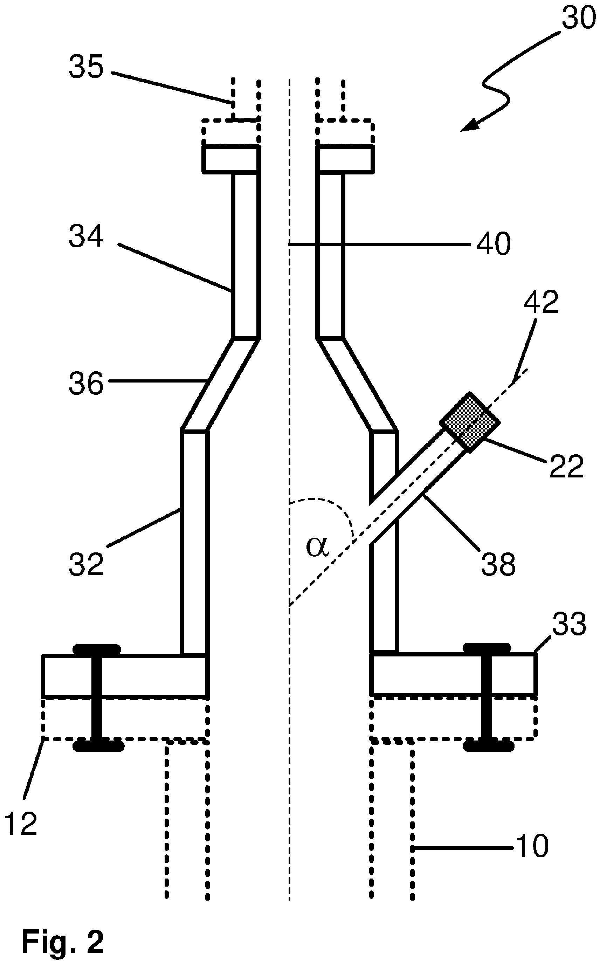

In Fig. 2 wird daher ein Verbindungsstück 30 gemäß der Erfindung gezeigt, dass die genannten Probleme überwindet und das Verbinden eines Reaktorrohrs 10 mit einem als Thermospannungskompensator ausgestalteten Zuleitungsrohr 34 für einen Reaktoreinsatzstrom und zum seitlichen Einführen eines Mehrpunkt-Thermoelements in das Reaktorrohr ermöglicht. Das Verbindungsstück 30 umfasst folgende Bestandteile:
(a) Einen ersten Abschnitt 32 mit einem zu dem Eintrittsende des Reaktorrohrs 10 weisenden, beispielsweise zylinderförmigen ersten Ende, das denselben Innendurchmesser aufweist wie das Eintrittsende des Reaktorrohrs und mit diesem gasdicht verbindbar ist. Im gezeigten Beispiel erfolgt das gasdichte Verbinden mittels eines Flanschs 33, der mit einem Flansch-Gegenstück 12 am Reaktorrohr 10 verbindbar ist. Dies ist in Fig. 2 durch gestrichelte Linien angedeutet.
(b) Einen zweiten Abschnitt 34 mit einem zu dem Austrittsende des Zuleitungsrohrs 35 (gestrichelt angedeutet) weisenden, beispielsweise zylinderförmigen zweiten Ende, das denselben Innendurchmesser aufweist wie das Austrittsende des Zuleitungsrohrs 35 und mit diesem gasdicht verbindbar ist. Die Verbindung kann mittels eines dazu vorgesehenen Flansch hergestellt werden, wie es in Fig. 2 angedeutet ist. Eine alternative Verbindungsmöglichkeit besteht im Herstellen einer Schweissverbindung.
(c) Ein Übergangsstück 36, dessen erstes Ende den Innendurchmesser des Eintrittsendes des Reaktorrohrs 10 bzw. des ersten Abschnitts 32 aufweist und dessen zweites, gegenüberliegendes Ende den Innendurchmesser des Austrittsendes des Zuleitungsrohrs 35 bzw. des zweiten Abschnitts 34 aufweist.
(d) Die Bestandteile (a), (b) und (c) weisen bevorzugt einen kreisrunden Querschnitt und eine Längsachse durch den jeweiligen Kreismittelpunkt auf, wobei die Bestandteile mit ihren Längsachsen fluchtend hintereinander angeordnet sind und somit auf einer gemeinsamen Längsachse 40 zusammenfallen.
(e) An dem ersten Abschnitt 32 ist ein Führungsrohr 38 angebracht, das mit dem ersten Abschnitt des Verbindungsstücks gasdicht verbunden ist und sich in den ersten Abschnitt 32 hinein öffnet. Die gasdichte Verbindung zwischen Führungsrohr und erstem Abschnitt wird bevorzugt mittels einer Schweissverbindung, in einem alternativen Beispiel mittels einer Flanschverbindung realisiert. Das Führungsrohr 38 ist an seinem von dem ersten Abschnitt fortweisenden Ende mit einem Befestigungsmittel 22, beispielsweise einer Rohrverschraubung, Quetschverschraubung, Klemmverschraubung oder Schneidringverschraubung ausgestattet, wobei das Befestigungsmittel das Hindurchführen und gasdichte Befestigen eines Mehrpunkt-Thermoelements (in Fig. 2 bildlich nicht gezeigt) gestattet.
(f) Der Winkel α zwischen der gemeinsamen Längsachse 40 und der Längsachse des Führungsrohrs 42 beträgt zwischen 15 und 60°, bevorzugt zwischen 20 und 45°, wobei der Winkel in Richtung auf das Zuleitungsrohr weist. Anders ausgedrückt, weist der Winkel von dem Reaktorrohr fort. In dem in Fig. 2 gezeigten Beispiel beträgt der Winkel α 45°. Untersuchungen haben gezeigt, dass die genannten Winkel es ermöglichen, ein Mehrpunkt-Thermoelement mittels des Führungsrohrs über das Eintrittsende des Reaktorrohrs in dessen Inneres einzuführen, ohne dass der hierfür erforderliche Kraftaufwand zu groß wird und zu starke Deformationen auf das Mehrpunkt-Thermoelement ausgeübt werden. Der Biegeradius von Mehrpunkt-Thermoelementen ist im Vergleich zu Einzelthermoelementen stärker begrenzt, da für jeden Temperaturmesspunkt ein entsprechendes Thermopaar vorzusehen ist und in einem Beispiel alle Thermopaare mit ihren Zuleitungen in ein gemeinsames Hüllrohr eingebettet werden, das zwar flexibel ist, dessen Flexibilität aber aufgrund der im Vergleich zu Einzelthermoelementen größeren Dicke der Anordnung begrenzt ist.

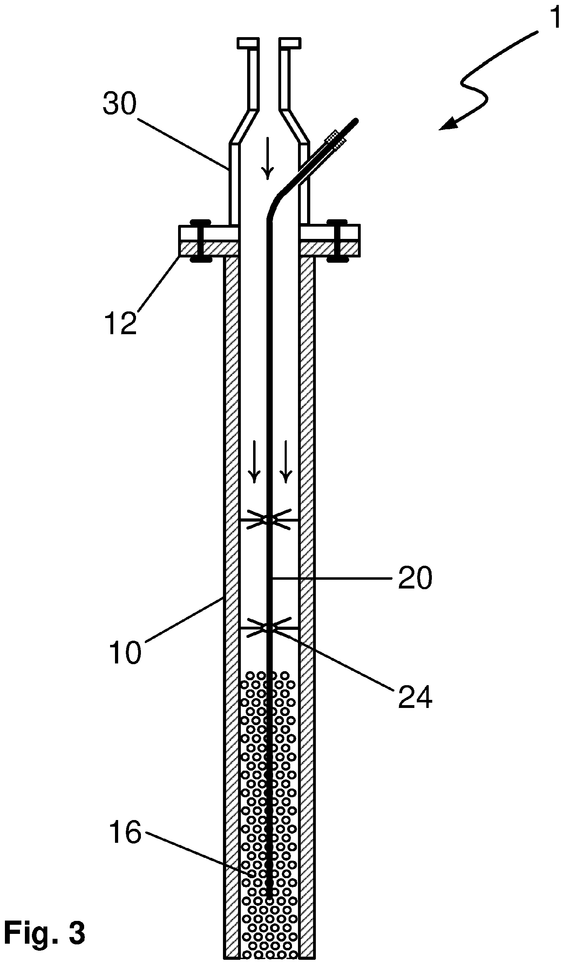

Fig. 3 zeigt schematisch ein Beispiel eines Reaktorrohrs 1 für die katalytische Dampfreformierung von Kohlenwasserstoffen mit einer Messvorrichtung 20 zum Messen axialer Temperaturprofile, wobei die Montage der Messvorrichtung 20 zwischen dem Reaktorrohr 10 und dem Zuleitungsrohr (in Fig. 3 nicht gezeigt) für das Kohlenwasserstoffe und Dampf enthaltende Einsatzgas mittels des erfindungsgemäßen Verbindungsstücks 30 erfolgt. Das seitliche Einführen der Messvorrichtung 20 (Mehrpunkt-Thermoelement) über das Führungsrohr und das Zentrieren der Messvorrichtung mittels der Zentrierkörper 24 ist angedeutet. Zu beachten ist dabei, das die in Fig. 3 gezeigte, erfindungsgemäße Anordnung das Einleiten des Einsatzgases ohne Totzonen ermöglicht. Hierdurch wird der Grad der unerwünschten Koksablagerung im Einlassbereich des Reaktorrohrs reduziert.

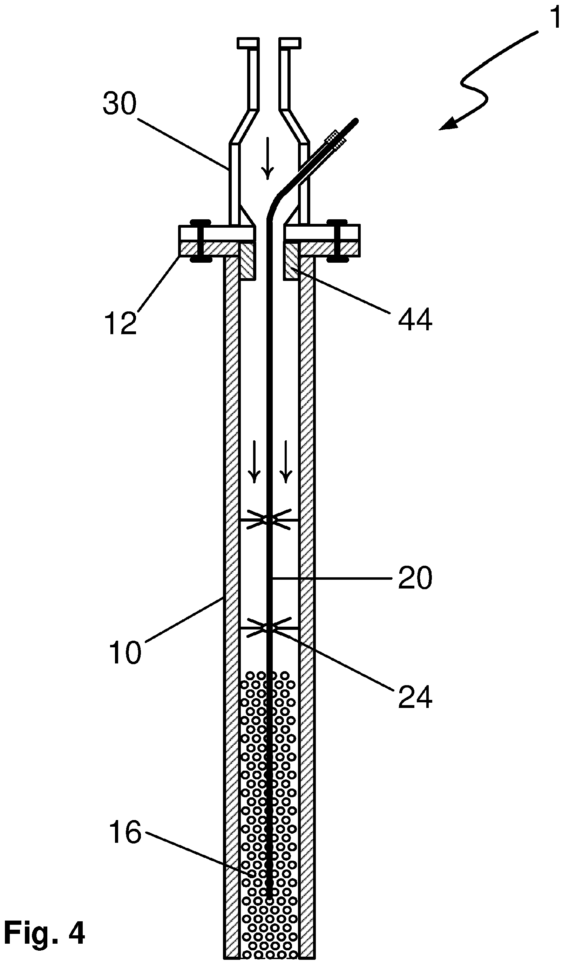

Fig. 4 zeigt schematisch ein Beispiel eines Reaktorrohrs 1, das ähnlich ausgestaltet ist wie das in Fig. 3 gezeigte Beispiel, wobei im Unterschied zu diesem das Eintrittsende des Reaktorrohrs mit einem rohrförmigen Isolierstück versehen ist. Dementsprechend ist der erste Abschnitt des Verbindungsstücks an seinem zum Eintrittsende des Reaktorrohrs weisenden, ersten Ende mit einer Verjüngung, beispielsweise mit einer kegelstumpfförmigen Verjüngung ausgestaltet, so dass das erste Ende des Verbindungsstücks denselben Innendurchmesser aufweist wie das rohrförmige Isolierstück. Die Ausgestaltung des zum Eintrittsende des Reaktorrohrs weisenden Endes des ersten Abschnitts des Verbindungsstücks mit einer kegelstumpfförmigen Verjüngung weist den weiteren Vorteil auf, dass die Einführung des Mehrpunkt-Thermoelements bei der Montage erleichtert wird; die kegelstumpfförmige Verjüngung wirkt gleichsam als Führungselement für das Thermoelement.

### Bezugszeichenliste

- [1]: Reformerrohr
- [10]: Reaktorrohr
- [12]: Flansch
- [14]: Deckel
- [16]: Katalysatorschüttung
- [18]: Zuleitungsrohr
- [20]: Messvorrichtung (Mehrpunkt-Thermoelement)
- [22]: Befestigungsmittel (z. B. Klemmverschraubung)
- [30]: Verbindungsstück
- [32]: erster Abschnitt
- [33]: Flansch
- [34]: zweiter Abschnitt
- [35]: Zuleitungsrohr
- [36]: Übergangsstück
- [38]: Führungsrohr
- [40]: gemeinsame Längsachse von 32, 34, 36
- [42]: Längsachse des Führungsrohrs
- [44]: Isolierstück

## Patentansprüche

1. Verbindungsstück zum Verbinden eines Reaktorrohrs (10) mit einem als Thermospannungskompensator ausgestalteten Zuleitungsrohr (18, 35) für einen Reaktoreinsatzstrom und zum seitlichen Einführen eines Mehrpunkt-Thermoelements (20) in das Reaktorrohr (10), umfassend folgende Bestandteile:
(a) einen ersten, zylinderförmigen oder kegelstumpfförmigen Abschnitt (32) mit einem ersten Ende, das zu einem kreisförmigen Eintrittsende des Reaktorrohrs (10) weist, wobei das erste Ende des Verbindungsstücks denselben Innendurchmesser aufweist wie das Eintrittsende des Reaktorrohrs (10) oder wie ein in das Eintrittsende des Reaktorrohrs (10) eingebrachtes, rohrförmiges Isolierstück (44) und wobei der erste Abschnitt (32) des Verbindungsstücks mit dem Eintrittsende des Reaktorrohrs (10) gasdicht verbindbar ist,
(b) einen zweiten, zylinderförmigen oder kegelstumpfförmigen Abschnitt (34) mit einem zweiten Ende, das zu einem kreisförmigen Austrittsende des Zuleitungsrohrs (18, 35) weist, wobei das zweite Ende des Verbindungsstücks denselben Innendurchmesser aufweist wie das Austrittsende des Zuleitungsrohrs (18, 35) und mit diesem gasdicht verbindbar ist,
(c) mindestens ein Übergangsstück (36), gasdicht verbindbar mit dem ersten und dem zweiten Abschnitt des Verbindungsstücks,
(d) wobei die Bestandteile (a), (b) und (c) einen kreisrunden Querschnitt und eine Längsachse durch den jeweiligen Kreismittelpunkt aufweisen, wobei die Bestandteile mit ihren Längsachsen fluchtend hintereinander angeordnet sind und somit auf einer gemeinsamen Längsachse zusammenfallen,
(e) ein an einem der Bestandteile (a), (b) und (c) seitlich angebrachtes, mit dem Bestandteil gasdicht verbundenes und sich in den Bestandteil hinein öffnendes Führungsrohr (38), das an seinem von dem Bestandteil fortweisenden Ende mit einem Befestigungsmittel ausgestattet ist, das das Hindurchführen und gasdichte Befestigen eines Mehrpunkt-Thermoelements (20) gestattet,
(f) wobei der Winkel zwischen der gemeinsamen Längsachse und der Längsachse des Führungsrohrs (38) zwischen 15 und 60°, bevorzugt zwischen 20 und 45° beträgt und der Winkel in Richtung auf das Zuleitungsrohr (35) weist.

2. Verbindungsstück nach Anspruch 1, **dadurch gekennzeichnet, dass** der erste Abschnitt (32), der zweite Abschnitt (34), das mindestens eine Übergangsstück (36) und das Führungsrohr (38) oder Kombinationen dieser Elemente einstückig oder mehrstückig, aber gasdicht verbindbar ausgeführt sind, so dass alle Elemente im verbundenen Zustand miteinander in Fluidverbindung stehen.

3. Verbindungsstück nach Anspruch 1 oder 2, **dadurch gekennzeichnet, dass** im verbundenen Zustand die gemeinsame Längsachse des Verbindungsstücks mit dem Mittelpunkt des Eintrittsendes des Reaktorrohrs (10) und mit dem Mittelpunkt des Austrittsendes des Zuleitungsrohrs (18, 35) zusammenfällt.

4. Verbindungsstück nach einem der vorigen Ansprüche, **dadurch gekennzeichnet, dass** der erste und/oder der zweite Abschnitt des Verbindungsstücks einen Flansch (33) aufweisen, der mit Flansch-Gegenstücken an dem Eintrittsende des Reaktorrohrs (10) und/oder an dem Austrittsende des Zuleitungsrohrs (35) gasdicht verbindbar ist.

5. Verbindungsstück nach einem der vorigen Ansprüche, **dadurch gekennzeichnet, dass** das von dem Verbindungsstück fortweisende Ende des Führungsrohrs (38) ein Außengewinde aufweist und eine Rohrverschraubung, Quetschverschraubung, Klemmverschraubung oder Schneidringverschraubung als Befestigungsmittel dient.

6. Messvorrichtung zum Messen axialer Temperaturprofile in einem Reaktorrohr, umfassend:
(a) ein Verbindungsstück nach Anspruch 1 bis 5,
(b) ein Mehrpunkt-Thermoelement (20),
(c) mindestens einen Zentrierkörper zum Zentrieren des Mehrpunkt-Thermoelements im Reaktorrohr, wobei der Zentrierkörper umfasst:
(c1) einen Innenring, der das Durchführen des Mehrpunkt-Thermoelements gestattet,
(c2) eine Vielzahl von Distanzstücken, die in Bezug auf den Innenring radial und in gleichen Abständen an der Außenseite des Innenrings angeordnet sind, wobei die Distanzstücke gleiche Länge aufweisen und die Länge so gewählt wird, dass der Kreismittelpunkt des Innenrings mit der Längsachse des Reaktorrohrs (10) zusammenfällt, wenn der Zentrierkörper in das Reaktorrohr (10) eingebracht wird und die durch die Distanzstücke aufgespannte Ebene senkrecht zu der Längsachse des Reaktorrohrs (10) angeordnet ist.

7. Messvorrichtung nach Anspruch 6 zum Messen axialer Temperaturprofile in einem mit einer Schüttung eines festen, partikelförmigen Katalysators gefüllten Reaktorrohrs (10), **dadurch gekennzeichnet, dass** der mittlere Abstand zweier benachbarter Distanzstücke größer ist als die mittlere Länge der Katalysatorpartikel.

8. Verfahren zum Montieren der Messvorrichtung nach Anspruch 6 oder 7 in einem Reaktorrohr (10) zur Durchführung endothermer oder exothermer, heterogen katalysierter chemischer Reaktionen, umfassend folgende Schritte:
(a) Bereitstellen des Reaktorrohrs (10), der Messvorrichtung (20), des Zuleitungsrohrs (18, 35) für den Reaktoreinsatzstrom und eines festen, partikelförmigen Katalysators als Schüttgut,
(b) Durchführen des Mehrpunkt-Thermoelements (20) durch das Zuleitungsrohr (18, 35) und durch die Innenringe von mindestens zwei, bevorzugt mindestens drei Zentrierkörpern,
(c) Einführen des Mehrpunkt-Thermoelements (20) mit den Zentrierkörpern in das Innere des Reaktorrohrs (10) durch dessen Eintrittsende,
(d) Einfüllen des festen, partikelförmigen Katalysators in das Innere des Reaktorrohrs (10) durch dessen Eintrittsende bis zu einer festgelegten Füllhöhe,
(e) gasdichtes Verbinden des Verbindungsstücks (30) mit dem Eintrittsende des Reaktorrohrs (10),
(f) gasdichtes Verbinden des Verbindungsstücks (30) mit dem Austrittsende des Zuleitungsrohrs (35),
(g) gasdichtes Befestigen des Mehrpunkt-Thermoelements (20) im Führungsrohr (38) mit dem Befestigungsmittel.

9. Verfahren zum Montieren der Messvorrichtung nach Anspruch 8, **dadurch gekennzeichnet, dass**
(a) das Einfüllen des festen, partikelförmigen Katalysators bis zur Unterkante des untersten Zentrierkörpers erfolgt,
(b) der unterste Zentrierkörper um eine festgelegte Länge entlang der Längsachse des Reaktorrohrs (10) angehoben wird,
(c) die Schritte (a) und (b) wiederholt werden, bis die festgelegte Füllhöhe erreicht ist,
(d) der mindestens eine Zentrierkörper vor dem Verbinden des Verbindungsstücks mit dem Reaktorrohr (10) entfernt wird.

10. Verfahren zum Montieren der Messvorrichtung nach Anspruch 8 oder 9, **dadurch gekennzeichnet, dass** das gasdichte Verbinden des Verbindungsstücks mit dem Eintrittsende des Reaktorrohrs (10) und/oder das gasdichte Verbinden des Verbindungsstücks mit dem Austrittsende des Zuleitungsrohrs (35) mittels Flanschverbindungen und/oder Schweissverbindungen erfolgt.

11. Verwendung des Verbindungsstücks nach Anspruch 1 bis 5 und/oder der Messvorrichtung nach Anspruch 6 oder 7 zur Messung axialer Temperaturprofile in einem Reformerrohr für die Dampfreformierung von Kohlenwasserstoffen.

## Claims

1. Connecting piece for connecting a reactor tube (10) to a feed pipe (18, 35) configured as a thermal stress compensator for a reaction input stream and for lateral introduction of a multipoint thermocouple (20) into the reactor tube (10), comprising the following constituent parts:
(a) a first cylindrical or frustoconical section (32) having a first end pointing towards a circular entry end of the reactor tube (10), wherein the first end of the connecting piece has the same internal diameter as the entry end of the reactor tube (10) or as a tubular insulation piece (44) introduced into the entry end of the reaction tube (10), and wherein the first section (32) of the connecting piece is connectable to the entry end of the reactor tube (10) in a gas-tight manner,
(b) a second cylindrical or frustoconical section (34) having a second end pointing towards a circular exit end of the feed pipe (18, 35), wherein the second end of the connecting piece has the same internal diameter as the exit end of the feed pipe (18, 35) and is connectable thereto in a gas-tight manner,
(c) at least one transition piece (36) connectable to the first and the second section of the connecting piece in a gas-tight manner,
(d) wherein the constituent parts (a), (b) and (c) have a circular cross section and a longitudinal axis through the respective circle centre point, wherein the constituent parts are arranged one behind the other with their longitudinal axes in alignment and thus coincide on a common longitudinal axis,
(e) a guide tube (38) laterally attached to one of the constituent parts (a), (b) and (c), connected to the constituent part in a gas-tight manner and opening into that constituent part that at its end pointing away from the constituent part is provided with a fastening means which permits feedthrough and gas-tight fastening of a multipoint thermocouple (20),
(f) wherein the angle between the common longitudinal axis and the longitudinal axis of the guide tube (38) is between 15° and 60°, preferably between 20° and 45°, and the angle points in the direction of the feed pipe (35).

2. Connecting piece according to Claim 1, **characterized in that** the first section (32), the second section (34), the at least one transition piece (36) and the guide tube (38), or combinations of these elements, are single-piece or multi-piece but connectable in a gas-tight manner so that all elements in the connected state are fluidically connected to one another.

3. Connecting piece according to Claim 1 or 2, **characterized in that** in the connected state the common longitudinal axis of the connecting piece coincides with the centre point of the entry end of the reactor tube (10) and with the centre point of the exit end of the feed pipe (18, 35).

4. Connecting piece according to one of the preceding claims, **characterized in that** the first and/or the second section of the connecting piece have a flange (33) which is connectable in a gas-tight manner to flange counterparts at the entry end of the reactor tube (10) and/or at the exit end of the feed pipe (35).

5. Connecting piece according to one of the preceding claims, **characterized in that** the end of the guide tube (38) pointing away from the connecting piece has an external thread, and a pipe screw fitting, pinch screw fitting, compression screw fitting or cutting ring screw fitting serves as the fastening means.

6. Measurement apparatus for measuring axial temperature profiles in a reactor tube, comprising:
(a) a connecting piece according to Claims 1 to 5,
(b) a multipoint thermocouple (20),
(c) at least one centring body for centring the multipoint thermocouple in the reactor tube, wherein the centring body comprises:
(c1) an inner ring which permits feedthrough of the multipoint thermocouple,
(c2) a multiplicity of spacers which in terms of the inner ring are arranged radially and at equal spacings along the outside of the inner ring, wherein the spacers have the same length and the length is chosen in such a way that the circle centre point of the inner ring coincides with the longitudinal axis of the reactor tube (10) when the centring body is introduced into the reactor tube (10), and the plane defined by the spacers is arranged perpendicularly to the longitudinal axis of the reactor tube (10).

7. Measurement apparatus according to Claim 6 for measuring axial temperature profiles in a reactor tube (10) filled with a bulk material of a solid, particulate catalyst, **characterized in that** the mean spacing between two adjacent spacers is greater than the mean length of the catalyst particles.

8. Method for assembling the measurement apparatus according to Claim 6 or 7 in a reactor tube (10) for carrying out endothermic or exothermic heterogeneously catalysed chemical reactions, comprising the following method steps:
(a) providing the reactor tube (10), the measurement apparatus (20), the feed pipe (18, 35) for the reactor input stream, and a solid, particulate catalyst as bulk material,
(b) feeding the multipoint thermocouple (20) through the feed pipe (18, 35) and through the inner rings of at least two, preferably at least three, centring bodies,
(c) introducing the multipoint thermocouple (20) with the centring bodies into the interior of the reactor tube (10) through the entry end thereof,
(d) filling the solid, particulate catalyst into the interior of the reactor tube (10) through the entry end thereof up to a specified fill height,
(e) connecting the connecting piece (30) to the entry end of the reactor tube (10) in a gas-tight manner,
(f) connecting the connecting piece (30) to the exit end of the feed pipe (35) in a gas-tight manner,
(g) fastening the multipoint thermocouple (20) in the guide tube (38) in a gas-tight manner using the fastening means.

9. Method for assembling the measurement apparatus according to Claim 8, **characterized in that**
(a) the filling of the solid, particulate catalyst is carried out up to the lower edge of the lowermost centring body,
(b) the lowermost centring body is raised by a specified length along the longitudinal axis of the reactor tube (10),
(c) steps (a) and (b) are repeated until the specified fill height has been achieved,
(d) the at least one centring body is removed prior to connecting the connecting piece to the reactor tube (10).

10. Method for assembling the measurement apparatus according to Claim 8 or 9, **characterized in that** the gas-tight connection of the connecting piece to the entry end of the reactor tube (10) and/or the gas-tight connection of the connecting piece to the exit end of the feed pipe (35) are/is performed by means of flanged connections and/or welded connections.

11. Use of the connecting piece according to Claims 1 to 5 and/or of the measurement apparatus according to Claim 6 or 7 for measuring axial temperature profiles in a reformer tube for steam reforming of hydrocarbons.

## Revendications

1. Pièce de liaison permettant de relier un tube de réacteur (10) à un tube d'amenée (18, 35) conçu sous forme de compensateur de contraintes thermiques pour un flux d'alimentation de réacteur et permettant d'insérer latéralement un thermocouple multipoint (20) dans le tube de réacteur (10), comprenant les composants suivants :
(a) une première section (32) cylindrique ou tronconique dotée d'une première extrémité qui est tournée vers une extrémité d'entrée circulaire du tube de réacteur (10), la première extrémité de la pièce de liaison présentant le même diamètre intérieur que l'extrémité d'entrée du tube de réacteur (10) ou qu'une pièce d'isolation (44) tubulaire introduite dans l'extrémité d'entrée du tube de réacteur (10) et la première section (32) de la pièce de liaison pouvant être reliée de manière étanche aux gaz à l'extrémité d'entrée du tube de réacteur (10),
(b) une deuxième section (34) cylindrique ou tronconique dotée d'une deuxième extrémité qui est tournée vers une extrémité de sortie circulaire du tube d'amenée (18, 35), la deuxième extrémité de la pièce de liaison présentant le même diamètre intérieur que l'extrémité de sortie du tube d'amenée (18, 35) et pouvant être reliée de manière étanche aux gaz à celle-ci,
(c) au moins une pièce de transition (36), pouvant être reliée de manière étanche aux gaz à la première et à la deuxième section de la pièce de liaison,
(d) les composants (a), (b) et (c) présentant une section transversale circulaire et un axe longitudinal passant par le centre de cercle respectif, les composants étant disposés les uns derrière les autres avec leurs axes longitudinaux en alignement et coïncidant ainsi avec un axe longitudinal commun,
(e) un tube de guidage (38) fixé latéralement à l'un des composants (a), (b) et (c), relié de manière étanche aux gaz au composant et s'ouvrant dans le composant, lequel tube de guidage est équipé d'un moyen de fixation à son extrémité détournée du composant, lequel moyen de fixation permet le passage et la fixation de manière étanche aux gaz d'un thermocouple multipoint (20),
(f) l'angle entre l'axe longitudinal commun et l'axe longitudinal du tube de guidage (38) valant entre 15 et 60°, de préférence entre 20 et 45°, et l'angle étant tourné en direction du tube d'amenée (35) .

2. Pièce de liaison selon la revendication 1, **caractérisée en ce que** la première section (32), la deuxième section (34), l'au moins une pièce de transition (36) et le tube de guidage (38) ou des combinaisons de ces éléments sont réalisés d'une seule pièce ou en plusieurs pièces, mais de manière à pouvoir être reliés de manière étanche aux gaz, de sorte que tous les éléments soient en liaison fluidique les uns avec les autres dans l'état relié.

3. Pièce de liaison selon la revendication 1 ou 2, **caractérisée en ce que**, dans l'état relié, l'axe longitudinal commun de la pièce de liaison coïncide avec le centre de l'extrémité d'entrée du tube de réacteur (10) et avec le centre de l'extrémité de sortie du tube d'amenée (18, 35).

4. Pièce de liaison selon l'une des revendications précédentes, **caractérisée en ce que** la première et/ou la deuxième section de la pièce de liaison présentent une bride (33) qui peut être reliée de manière étanche aux gaz à des pièces conjuguées de bride au niveau de l'extrémité d'entrée du tube de réacteur (10) et/ou au niveau de l'extrémité de sortie du tube d'amenée (35).

5. Pièce de liaison selon l'une des revendications précédentes, **caractérisée en ce que** l'extrémité du tube de guidage (38) qui est éloignée de la pièce de liaison présente un filetage extérieur et un raccord tubulaire vissé, un raccord vissé à sertir, un raccord vissé avec serrage ou un raccord vissé à bague coupante sert de moyen de fixation.

6. Dispositif de mesure permettant de mesurer des profils de température axiaux dans un tube de réacteur, comprenant :
(a) une pièce de liaison selon les revendications 1 à 5,
(b) un thermocouple multipoint (20),
(c) au moins un corps de centrage permettant de centrer le thermocouple multipoint dans le tube de réacteur, le corps de centrage comprenant :
(c1) une bague intérieure qui permet le passage du thermocouple multipoint,
(c2) une pluralité de pièces d'espacement qui, par rapport à la bague intérieure, sont disposées radialement et de manière équidistante au niveau du côté extérieur de la bague intérieure, les pièces d'espacement présentant la même longueur et la longueur étant choisie de telle sorte que le centre de cercle de la bague intérieure coïncide avec l'axe longitudinal du tube de réacteur (10), lorsque le corps de centrage est introduit dans le tube de réacteur (10) et le plan défini par les pièces d'espacement est disposé perpendiculairement à l'axe longitudinal du tube de réacteur (10).

7. Dispositif de mesure selon la revendication 6 permettant de mesurer des profils de température axiaux dans un tube de réacteur (10) rempli d'un remplissage d'un catalyseur particulaire solide, **caractérisé en ce que** la distance moyenne entre deux pièces d'espacement adjacentes est supérieure à la longueur moyenne des particules de catalyseur.

8. Procédé permettant de monter le dispositif de mesure selon la revendication 6 ou 7 dans un tube de réacteur (10) permettant d'effectuer des réactions chimiques en catalyse hétérogène endothermiques ou exothermiques, comprenant les étapes suivantes :
(a) fourniture du tube de réacteur (10), du dispositif de mesure (20), du tube d'amenée (18, 35) pour le flux d'alimentation de réacteur et d'un catalyseur particulaire solide comme produit en vrac,
(b) guidage du thermocouple multipoint (20) à travers le tube d'amenée (18, 35) et à travers les bagues intérieures d'au moins deux, de préférence d'au moins trois corps de centrage,
(c) insertion du thermocouple multipoint (20) avec les corps de centrage dans l'intérieur du tube de réacteur (10) à travers l'extrémité d'entrée de celui-ci,
(d) remplissage de l'intérieur du tube de réacteur (10) avec le catalyseur particulaire solide à travers l'extrémité d'entrée du tube de réacteur jusqu'à une hauteur de remplissage définie,
(e) liaison étanche aux gaz de la pièce de liaison (30) avec l'extrémité d'entrée du tube de réacteur (10),
(f) liaison étanche aux gaz de la pièce de liaison (30) avec l'extrémité de sortie du tube d'amenée (35),
(g) fixation étanche aux gaz du thermocouple multipoint (20) dans le tube de guidage (38) à l'aide du moyen de fixation.

9. Procédé permettant de monter le dispositif de mesure selon la revendication 8, **caractérisé en ce que**
(a) le remplissage avec le catalyseur particulaire solide s'effectue jusqu'au bord inférieur du corps de centrage le plus bas,
(b) le corps de centrage le plus bas est élevé d'une longueur définie le long de l'axe longitudinal du tube de réacteur (10),
(c) les étapes (a) et (b) sont répétées jusqu'à ce que la hauteur de remplissage définie soit atteinte, (d) l'au moins un corps de centrage est retiré avant la liaison de la pièce de liaison au tube de réacteur (10).

10. Procédé permettant de monter le dispositif de mesure selon la revendication 8 ou 9, **caractérisé en ce que** la liaison étanche aux gaz de la pièce de liaison avec l'extrémité d'entrée du tube de réacteur (10) et/ou la liaison étanche aux gaz de la pièce de liaison avec l'extrémité de sortie du tube d'amenée (35) s'effectuent au moyen de liaisons par brides et/ou de liaisons soudées.

11. Utilisation de la pièce de liaison selon les revendications 1 à 5 et/ou du dispositif de mesure selon la revendication 6 ou 7 pour la mesure de profils de température axiaux dans un tube de reformage pour le reformage à la vapeur d'hydrocarbures.
